# EUROPÄISCHE PATENTANMELDUNG

(11) **EP 1 750 027 A2**
(43) Veröffentlichungstag der Anmeldung: **07.02.2007**
(21) Anmeldenummer: 06011579.7
(22) Anmeldetag: 03.06.2006
(51) Int. Cl.: F16D 48/06, F16D 33/16, B60T 10/02, B60T 1/087

(54) **Antriebsstrang**

(30) Priorität: 05.08.2005 DE 102005037640
(71) Anmelder: Voith Turbo GmbH & Co. KG, 89522 Heidenheim (DE)
(72) Erfinder: Scherer, Roland, 74564 Crailsheim (DE); Bischoff, Markus, 74544 Michelbach (DE)
(74) Vertreter: Schmidt, Sven Hendrik

(57) **Zusammenfassung**

Die Erfindung betrifft einen Antriebsstrang mit einer hydrodynamischen Maschine (1), umfassend wenigstens ein Primärrad (2) und ein Sekundärrad (3), welche miteinander einen mit einem Arbeitsmedium befüllbaren Arbeitsraum ausbilden;
- es ist wenigstens ein Steuerventil (4) vorgesehen, welches durch eine zugeordnete Steuereinheit (5) betätigbar ist, um die Arbeitsmediumführung in der hydrodynamischen Maschine (1) oder in oder aus der hydrodynamischen Maschine (1) zu steuern, und/oder wenigstens eine elektronische Baueinheit, die wenigstens mittelbar dem Steuern und/oder Überwachen der hydrodynamischen Maschine (1) oder eines vorgegebenen Zustandes in derselben dient;
- es ist ein Kühlmediumkreislauf (6) mit einem flüssigen oder gasförmigen Kühlmedium vorgesehen, um die hydrodynamische Maschine (1) und/oder das Arbeitsmedium derselben zumindest mittelbar zu kühlen;

Die Erfindung ist dadurch gekennzeichnet, dass
- die Steuereinheit (5) und/oder die elektronische Baueinheit derart im oder am Kühlmediumkreislauf (6) angeordnet ist, dass Wärme aus der Steuereinheit (5) und/oder der elektronischen Baueinheit durch Umströmung und/oder Anströmung der Steuereinheit und/oder der elektronischen Baueinheit mit dem Kühlmedium über den Kühlmediumkreislauf (6) abgeführt wird.

## Beschreibung

Die Erfindung betrifft einen Antriebsstrang, insbesondere einen Fahrzeugantriebsstrang, mit einer hydrodynamischen Maschine und einem Kühlmediumkreislauf, wobei insbesondere das Kühlmedium zugleich das Arbeitsmedium der hydrodynamischen Maschine ist.

Antriebsstränge, insbesondere Kraftfahrzeugantriebsstränge, mit hydrodynamischen Maschinen sind in einer Vielzahl von Ausführungen bekannt. Beispielsweise werden hydrodynamische Bremsen, sogenannte Retarder, heutzutage in Lastkraftfahrzeugen zum verschleißfreien Abbremsen des Fahrzeugs verwendet.

Solche hydrodynamische Maschinen, insbesondere Retarder, weisen einen Arbeitsraum auf, der mit einem Arbeitsmedium befüllbar ist, um Drehmoment beziehungsweise Antriebsleistung verschleißfrei von einem Primärrad auf ein Sekundärrad der hydrodynamischen Maschine, beispielsweise vom Rotor auf den Stator des Retarders, zu übertragen. Entsprechend der gewünschten Leistungsübertragung wird eine bestimmte Menge von Arbeitsmedium in den Arbeitsraum der hydrodynamischen Maschine geleitet. Die Arbeitsmediumführung in die hydrodynamische Maschine, aus dieser heraus und/oder innerhalb der hydrodynamischen Maschine wird dabei durch wenigstens ein Steuerventil, in der Regel mehrere hiervon, gesteuert. Das oder die Steuerventile, welche beispielsweise als Magnetventile ausgebildet sind, sind wiederum durch wenigstens eine ihnen zugeordnete Steuereinheit betätigbar, beispielsweise durch Bestromung der Magnetspule in dem jeweiligen Magnetventil. Die Steuerventile sind beispielsweise in einem Steuerluftsystem oder Druckluftsystem eingebracht und steuern den Druckluftzustand in bestimmten Abschnitten, insbesondere Leitungsabschnitten des Steuerluftsystems. Durch die Luft aus dem Steuerluftsystem werden Regel- oder Absperrventile und/oder -schieber und/oder -klappen im Arbeitsmediumkreislauf der hydrodynamischen Maschine gesteuert, beispielsweise ein Einlassventil und/oder ein Auslassventil für einen Retarder oder allgemein eine hydrodynamische Maschine. Die Steuerventile werden somit mit Luft (oder auch einem anderen Steuermedium) durchströmt, im Gegensatz zu den Ventilen, Schiebern oder Klappen im Arbeitsmediumkreislauf, welche durch die Steuerluft geschaltet werden.

Die Steuereinheit umfasst elektronische Komponenten, welche im Leistungsbetrieb einer Aufheizung unterliegen. Um die Steuereinheit mit einem wirtschaftlich vertretbaren Aufwand aus vergleichsweise günstigem Material fertigen zu können, ist die maximal zulässige Temperatur der Steuereinheit beschränkt. Die Temperatur der Steuereinheit ergibt sich dabei in Abhängigkeit der Umgebungstemperatur sowie dem Ausmaß der Eigenerwärmung. Heutzutage ist es beispielsweise im Kraftfahrzeugsektor üblich, die maximale Umgebungstemperatur im Motorraum, in welchem auch die Steuereinheit angeordnet ist, auf 120 °C zu begrenzen, so dass eine unzulässige Aufheizung der elektronischen Komponenten der Steuereinheit verhindert wird.

In jüngerer Zeit sind die Fahrzeughersteller jedoch bestrebt, höhere Umgebungstemperaturen im Fahrzeug zuzulassen, beispielsweise einen Temperaturbereich von -40 °C (unter arktischen Verhältnissen aus -50°C) bis über 120 °C hinaus. Hieraus resultieren aufgrund der höheren dauerhaft zulässigen Umgebungstemperaturen Einschränkungen in der zulässigen maximalen Einschaltdauer der elektronischen Steuereinheit von hydrodynamischen Maschinen sowie insbesondere deren als Magnetventile ausgeführten Steuerventile, da die für eine Eigenerwärmung zulässige Temperaturspanne entsprechend um die Differenz der höheren Umgebungstemperatur gegenüber der bisher maximal zulässigen Umgebungstemperatur vermindert ist. Durch die Begrenzung der über eine vorgegebene Zeitspanne maximal zulässigen Einschaltdauer wird die Eigenerwärmung vermindert und somit die maximal zulässige Temperatur der Werkstoffe der elektronischen Steuereinheit beziehungsweise der Steuerventile und/oder deren Umgebung eingehalten.

Eine solche Einschränkung der Einschaltzeit, beispielsweise durch eine zeitabhängige Einschaltung der Steuereinheit und/oder durch eine zeitabhängige Ansteuerung der Ventile, durch Vorgabe von definierten Pausenzeiten zwischen einzelnen Betätigungen oder durch Pulsweitenmodulation, wirkt sich nachteilig auf die Verfügbarkeit der hydrodynamischen Maschine aus und ist somit unerwünscht.

Der Erfindung liegt die Aufgabe zugrunde, einen Antriebsstrang mit einer hydrodynamischen Maschine mit wenigstens einem Steuerventil, das durch wenigstens eine zugeordnete Steuereinheit betätigbar ist, darzustellen, bei welchem die Verfügbarkeit der hydrodynamischen Maschine trotz der Verwendung von herkömmlichen kostengünstigen Werkstoffen für die Steuereinheit und/oder das Steuerventil nicht eingeschränkt ist, insbesondere ohne dass die Lebensdauer einzelner Elektronikkomponenten gegenüber herkömmlichen Ausführungen verkürzt ist.

Die erfindungsgemäße Aufgabe wird durch einen Antriebsstrang mit den Merkmalen von Anspruch 1 gelöst. Die abhängigen Ansprüche beschreiben vorteilhafte und besonders zweckmäßige Ausgestaltungen der Erfindung.

Der erfindungsgemäße Antriebsstrang weist eine hydrodynamische Maschine auf, welche wenigstens ein Primärrad und ein Sekundärrad umfasst, die miteinander einen mit einem Arbeitsmedium befüllbaren, insbesondere torusförmigen Arbeitsraum ausbilden. Dabei ist in der Regel wenigstens ein Steuerventil vorgesehen, mit welchem die Arbeitsmediumführung in der hydrodynamischen Maschine beziehungsweise in die oder aus der hydrodynamischen Maschine gesteuert werden kann. Das Steuerventil wird durch eine ihm zugeordnete Steuereinheit betätigt. Beispielsweise ist das Steuerventil als Magnetventil ausgebildet, welches eine ein Magnetfeld erzeugende Spule aufweist, die durch die zugeordnete Steuereinheit mit einer vorgegebenen elektrischen Leistung versorgt wird. Das Steuerventil kann zum Beispiel Bestandteil eines Steuerluft- oder Druckluftsystems sein, mittels welchem arbeitsmediumführende Ventile oder Schalt- bzw. Absperreinrichtungen im Arbeitsmediumkreislauf betätigt werden.

Allgemein ist es jedoch auch denkbar, ein oder mehrere im Arbeitsmediumkreislauf der hydrodynamischen Maschine angeordnete arbeitsmediumführende Ventile oder Schaltorgane unmittelbar durch die elektronische Steuereinheit zu betätigen.

In der Regel umfasst die hydrodynamische Maschine eine Vielzahl von Steuerventilen, welche durch eine einzige oder durch mehrere zugeordnete Steuereinheiten unabhängig voneinander oder abhängig voneinander betätigbar sind.

Der erfindungsgemäße Antriebsstrang weist einen Kühlmediumkreislauf auf, in welchem ein flüssiges oder gasförmiges Kühlmedium umläuft, insbesondere mittels einer Kühlmediumpumpe umgewälzt wird. In der Regel ist in dem Kühlmediumkreislauf wenigstens ein Wärmetauscher vorgesehen, beispielsweise ein Fahrzeugkühler, mit dem Wärme aus dem Kühlmedium an die Umgebung abgeleitet wird. Das Kühlmedium kann zugleich das Arbeitsmedium der hydrodynamischen Maschine sein, welche beispielsweise als hydrodynamischer Retarder ausgebildet ist und deren Arbeitsraum somit im Bremsbetrieb mit dem Arbeitsmedium befüllbar ist und im Nichtbremsbetrieb vollständig oder bis auf eine vorgegebene Restarbeitsmediummenge entleert ist. Insbesondere ist die hydrodynamische Maschine als Sekundärwasserretarder ausgeführt, das heißt als ein auf der Getriebeabtriebsseite angeordneter, mit Wasser oder einem Wassergemisch als Arbeitmedium ausgeführter Retarder.

Erfindungsgemäß weist die hydrodynamische Maschine wenigstens eine elektronische Baueinheit auf, umfassend wärmeempfindliche elektronische Komponenten, welche insbesondere der Steuerung und/oder Überwachung der hydrodynamischen Maschine beziehungsweise von vorgegebenen Zuständen in der hydrodynamischen Maschine dient. Die elektronische Baueinheit ist insbesondere die beschriebene Steuereinheit, welche das oder die genannten Steuerventil(e) betätigt.

Erfindungsgemäß ist die elektronische Baueinheit und/oder die wenigstens eine Steuereinheit derart in dem oder an dem Kühlmediumkreislauf angeordnet, dass Wärme aus der elektronischen Baueinheit und/oder der Steuereinheit durch Umströmung und/oder Anströmung der Baueinheit und/oder der Steuereinheit mit dem Kühlmedium des Kühlmediumkreislaufes über den Kühlmediumkreislauf und insbesondere den darin vorgesehenen Wärmetauscher beziehungsweise Fahrzeugkühler an die Umgebung abgeleitet wird.

Im nachfolgenden wird der Einfachheit halber die Erfindung anhand der erfindungsgemäßen Kühlung, insbesondere Flüssigkeitskühlung, der Steuereinheit beschrieben, wobei dieselben Merkmale bzw. Maßnahmen allgemein bei der genannten elektronischen Baueinheit vorgesehen werden können.

Beispielsweise kann die Steuereinheit eine vom Kühlmedium gekühlte Fläche aufweisen, deren Temperatur insbesondere konstant oder im wesentlichen konstant gehalten wird oder zumindest eine vorgegebene Maximaltemperatur nicht überschreitet. Die Steuereinheit kann innerhalb von einem Gehäuse angeordnet sein, welches mit dem Kühlmedium an beziehungsweise von diesem umströmt wird. Innerhalb des Gehäuses kann zudem ein oder eine Vielzahl von Steuerventilen positioniert sein, welche insbesondere durch diese Steuereinheit betätigbar sind.

Die Steuereinheit und/oder die Steuerventile (oder allgemein die elektronische Baueinheit) können beispielsweise ein Gehäuse mit einem Oberflächenelement aufweisen, welches in den Kühlmediumkreislauf hineinragt. Beispielsweise kann ein Gehäuse mit äußeren Kühlrippen vorgesehen werden, wobei die Kühlrippen vom Kühlmedium umströmt werden.

Allgemein kann die Steuereinheit und/oder dass oder die Steuerventile in einem geeigneten Einbauraum im Antriebsstrang beziehungsweise im Fahrzeug positioniert sein, welcher vom Kühlmedium an und/oder umströmt wird.

Die Temperatur der Steuereinheit stellt sich somit entsprechend einem Wärmeübergang von der Steuereinheit auf das Kühlmedium des Fahrzeugs oder während eines sogenannten Kaltstarts vom Kühlmedium auf die Steuereinheit ein. Gleiches gilt insbesondere für beispielsweise mit der Steuereinheit in einem gemeinsamen Steuermodul und/oder einem gemeinsamen Gehäuse integrierte Steuerventile. Der Temperaturverlauf der Steuereinheit beziehungsweise der Steuerventile ist somit im Vergleich zu herkömmlichen Ausführungen vergleichmäßigt, was sich positiv auf die Lebensdauer der verwendeten Bauteile auswirkt.

Die Erfindung soll nachfolgend anhand eines Ausführungsbeispiels und der Figur exemplarisch beschrieben werden.

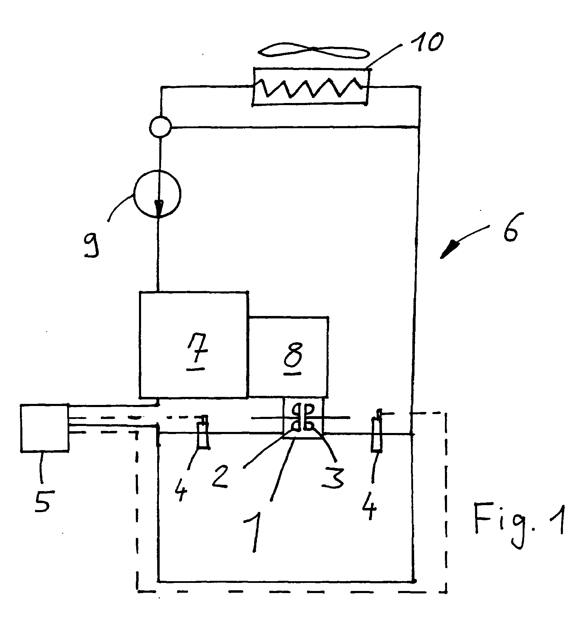

Die Figur 1 zeigt verschiedene Komponenten eines Kraftfahrzeugantriebsstrangs, nämlich einen Verbrennungsmotor 7, welcher über ein daran angeschlossenes Getriebe 8 die Antriebsräder eines Kraftfahrzeugs (nicht dargestellt) antreibt. An dem Getriebe 8 ist die hydrodynamische Maschine 1, hier als hydrodynamischer Retarder ausgebildet, in einer Triebverbindung mit dem Motor 7 angeschlossen, welche ein Primärrad 2 und ein Sekundärrad 3 aufweist, welche miteinander einen torusförmigen Arbeitsraum ausbilden, der mit dem Kühlmedium des Kühlmediumkreislaufes 6, das zugleich Arbeitsmedium der hydrodynamischen Maschine 1 ist, befüllbar ist, um das Kraftfahrzeug verschleißfrei abzubremsen.

Das Kühlmedium, vorliegend Wasser oder ein Wassergemisch, des Kühlmediumkreislaufes 6 wird mittels der Wasserpumpe 9 und im Bremsbetrieb der hydrodynamischen Maschine 1 ergänzend durch dieselbe im Kühlmediumkreislauf 6 umgewälzt. Mittels des Fahrzeugkühlers 10 wird die Wärme aus dem Kühlmedium an die Umgebung abgegeben.

Die Befüllung und Entleerung des Arbeitsraumes der hydrodynamischen Maschine 1 wird durch die Steuerventile 4 gesteuert. Die Steuerventile sind in einem Steuerluftsystem (nicht dargestellt) angeordnet, wobei arbeitsmediumführende Organe der hydrodynamischen Maschine, beispielsweise Ein- und Auslassventile (nicht dargestellt) durch das Steuerluftsystem gesteuert beziehungsweise betätigt werden. Diese Steuerventile 4 sind als Magnetventile ausgebildet und werden durch die Steuereinheit 5 betätigt. Sowohl die Steuereinheit 5 als auch die Steuerventile 4 stehen in einer unmittelbaren wärmeübertragenden Verbindung mit dem Kühlmedium des Kühlkreislaufes 6, das heißt sie weisen beispielsweise eine Gehäuse auf, insbesondere mit einer Wandstärke von nur wenigen Millimetern (mm), beispielsweise 0,3 bis 2 mm oder 0,5 bis 1,5 mm, das unmittelbar vom Kühlmedium an- oder umströmt wird. So wird vorteilhaft sowohl die Steuereinheit 5 als auch die Steuerventile 4, welche beispielsweise in einem gemeinsamen Steuermodul und/oder einem gemeinsamen Gehäuse angeordnet sind, vom Kühlmedium umströmt. Insbesondere wird wenigstens ein wesentlicher Bereich des Steuermoduls oder des Steuergehäuses, beispielsweise wenigstens eine Seitenfläche, mit dem Kühlmediumstrom beaufschlagt.

Wie man sieht, ist die hydrodynamische Maschine 1, in Strömungsrichtung des Kühlmediums im Kühlkreislauf 6 betrachtet, hinter dem Verbrennungsmotor 7 angeordnet, und die Steuereinheit 5 ist insbesondere zusammen mit einem oder mehreren oder allen Steuerventilen 4 im Bereich des Eintritts des Kühlmediums in die hydrodynamische Maschine 1 angeordnet, das heißt zumindest in einem solchen Bereich der hydrodynamischen Maschine 1, welcher die Temperatur des Kühlmediums, wenn es in den Retarder eintritt, beispielsweise von 105 °C, aufweist oder eine Temperatur, die um einen maximalen Betrag von beispielsweise 5, 10 oder 15 °C darüber liegt.

Selbstverständlich ist es auch möglich, die Steuereinheit 5 und/oder die Steuerventile 4 im Bereich des Austritts des Kühlmediums aus der hydrodynamischen Maschine 1 anzuordnen oder in einem solchen Bauteil der hydrodynamischen Maschine 1, welcher die Temperatur des aus der hydrodynamischen Maschine 1 austretenden Kühlmediums von beispielsweise 110 °C aufweist, oder eine Temperatur, die um eine vorgegebene Differenz oberhalb dieser Temperatur von beispielsweise 5, 10 oder 15 °C oberhalb der austretenden Kühlmediumtemperatur liegt.

Allgemein ist es vorteilhaft, wenn das Kühlmedium, insbesondere das Arbeitsmedium der hydrodynamischen Maschine 1, dann der Steuereinheit 5 und/oder den Steuerventilen 4 (oder allgemein der elektronischen Steuereinheit) zugeleitet wird, wenn es eine noch vergleichsweise niedrige Temperatur aufweist. Je niedriger die Temperatur ist, desto mehr Wärme kann aus den insbesondere elektronischen Komponenten abgeleitet werden, beispielsweise den elektronischen Komponenten der Steuereinheit 5 oder den Magnetspulen der Steuerventile 4. Zugleich ist der Wärmeeintrag durch diese Wärmeableitung in das Kühlmedium derart gering, dass im Kühlmediumkreislauf nachfolgende zu kühlende Bauteile durch diesen Wärmeeintrag nicht negativ beeinträchtigt werden. Vorteilhaft wird daher das Kühlmedium zunächst zu der Steuereinheit 5 und/oder den Steuerventilen 4 geleitet, bevor es in den Arbeitsraum der hydrodynamischen Maschine 1 eintritt. Das zu der Steuereinheit 5 und/oder den Steuerventilen 4 (allgemein der elektronischen Baueinheit im Bereich der hydrodynamischen Maschine 1) zugeleitete Kühlmedium kann entweder, wie dargestellt, zuvor durch den Verbrennungsmotor 7 zur Kühlung desselben geleitet worden sein oder alternativ in einem Bypass (nicht dargestellt) um den Verbrennungsmotor 7 herumgeleitet worden sein, so dass es im letzteren Fall im wesentlichen die Temperatur nach dem Austritt aus der Wasserpumpe 9 aufweist.

Durch die erfindungsgemäße Ausführung des Antriebsstrangs ist es beispielsweise möglich, Umgebungstemperaturen von 140 °C oder darüber, insbesondere im Motorraum eines Kraftfahrzeugs, vorzusehen.

## Patentansprüche

1. Antriebsstrang mit einer hydrodynamischen Maschine (1), umfassend wenigstens ein Primärrad (2) und ein Sekundärrad (3), welche miteinander einen mit einem Arbeitsmedium befüllbaren Arbeitsraum ausbilden;
1.1 es ist wenigstens ein Steuerventil (4) vorgesehen, welches durch eine zugeordnete Steuereinheit (5) betätigbar ist, um die Arbeitsmediumführung in der hydrodynamischen Maschine (1) oder in oder aus der hydrodynamischen Maschine (1) zu steuern, und/oder wenigstens eine elektronische Baueinheit, die wenigstens mittelbar dem Steuern und/oder Überwachen der hydrodynamischen Maschine (1) oder eines vorgegebenen Zustandes in derselben dient;
1.2 es ist ein Kühlmediumkreislauf (6) mit einem flüssigen oder gasförmigen Kühlmedium vorgesehen, um die hydrodynamische Maschine (1) und/oder das Arbeitsmedium derselben zumindest mittelbar zu kühlen;
**dadurch gekennzeichnet, dass**
1.3 die Steuereinheit (5) und/oder die elektronische Baueinheit derart im oder am Kühlmediumkreislauf (6) angeordnet ist, dass Wärme aus der Steuereinheit (5) und/oder der elektronischen Baueinheit durch Umströmung und/oder Anströmung der Steuereinheit (5) und/oder der elektronischen Baueinheit mit dem Kühlmedium über den Kühlmediumkreislauf (6) abgeführt wird.

2. Antriebsstrang gemäß Anspruch 1, **dadurch gekennzeichnet, dass** das Kühlmedium des Kühlmediumkreislaufes (6) zugleich das Arbeitsmedium der hydrodynamischen Maschine (1) ist.

3. Antriebsstrang gemäß einem der Ansprüche 1 oder 2, **dadurch gekennzeichnet, dass** zusätzlich das wenigstens eine Steuerventil (4) derart in oder am Kühlmediumkreislauf (6) angeordnet ist, dass Wärme aus dem Steuerventil (4) durch Umströmung und/oder Anströmung des Steuerventils (4) mit dem Kühlmedium über den Kühlmediumkreislauf (6) abgeführt wird.

4. Antriebsstrang gemäß einem der Ansprüche 1 bis 3, **dadurch gekennzeichnet, dass** die Steuereinheit (5) und das wenigstens eine Steuerventil (4) in einem gemeinsamen Steuermodul integriert sind und insbesondere von einem gemeinsamen Gehäuse umschlossen werden.

5. Antriebsstrang gemäß einem der Ansprüche 1 bis 4, **dadurch gekennzeichnet, dass** das wenigstens eine Steuerventil (4) als Magnetventil ausgeführt ist.

6. Antriebsstrang gemäß einem der Ansprüche 2 bis 5, **dadurch gekennzeichnet, dass** die hydrodynamische Maschine (1) im Kühlmediumkreislauf (6) in Reihe mit einem Motor, insbesondere Verbrennungsmotor (7), geschaltet ist, so dass die hydrodynamische Maschine (1) und der Motor von dem Kühlmedium durchströmt werden, und dass die Steuereinheit (5) und insbesondere das wenigstens eine Steuerventil (4) im Bereich des Kühlmediumeintritts in die hydrodynamische Maschine (1) angeordnet ist/sind.

7. Antriebsstrang gemäß einem der Ansprüche 2 bis 5, **dadurch gekennzeichnet, dass** die hydrodynamische Maschine (1) im Kühlmediumkreislauf (6) in Reihe mit einem Motor, insbesondere Verbrennungsmotor (7) geschaltet ist, so dass die hydrodynamische Maschine (1) und der Motor von dem Kühlmedium durchströmt werden, und dass die Steuereinheit (5) und insbesondere das wenigstens eine Steuerventil (4) im Bereich des Kühlmediumaustritts aus der hydrodynamischen Maschine (1) angeordnet ist/sind.

8. Antriebsstrang gemäß einem der Ansprüche 1 bis 7, **dadurch gekennzeichnet, dass** die hydrodynamische Maschine (1) ein Retarder ist.

9. Antriebsstrang gemäß einem der Ansprüche 6 bis 8, **dadurch gekennzeichnet, dass** die hydrodynamische Maschine (1) im Kühlmediumkreislauf (6) hinter dem Motor angeordnet ist.
